(19) Europäisches Patentamt
European Patent Office
Office européen des brevets

(11) EP 4 080 610 B1

(12) EUROPEAN PATENT SPECIFICATION

(45) Date of publication and mention of the grant of the patent:
**06.05.2026 Bulletin 2026/19**

(21) Application number: **20903945.2**

(22) Date of filing: **11.12.2020**

(51) International Patent Classification (IPC):
***H01M 4/36*** *(2006.01)* ***H01M 4/38*** *(2006.01)*
***H01M 4/48*** *(2010.01)* ***H01M 4/587*** *(2010.01)*
***H01M 4/62*** *(2006.01)* ***H01M 10/052*** *(2010.01)*
***C01B 33/021*** *(2006.01)* ***C01B 32/05*** *(2017.01)*
***C01B 32/21*** *(2017.01)* ***H01M 4/13*** *(2010.01)*
***C01B 32/956*** *(2017.01)* ***H01M 10/0525*** *(2010.01)*
***H01M 4/04*** *(2006.01)* ***H01M 4/139*** *(2010.01)*
***H01M 4/02*** *(2006.01)*

(52) Cooperative Patent Classification (CPC):
**C01B 32/05; C01B 32/956; H01M 4/0471; H01M 4/139; H01M 4/366; H01M 4/386; H01M 4/483; H01M 4/587;** C01B 32/21; C01B 33/021; C01P 2002/02; C01P 2004/84; C01P 2006/12; H01M 10/0525; H01M 2004/027;
(Cont.)

(86) International application number:
**PCT/KR2020/018192**

(87) International publication number:
**WO 2021/125711 (24.06.2021 Gazette 2021/25)**

(54) **A MANUFACTURING METHOD OF A NEGATIVE ACTIVE MATERIAL FOR A LITHIUM SECONDARY BATTERY, A NEGATIVE ACTIVE MATERIAL FOR A LITHIUM SECONDARY BATTERY, AND A LITHIUM SECONDARY BATTERY CONTAINING THIS NEGATIVE ACTIVE MATERIAL**

VERFAHREN ZUR HERSTELLUNG EINES NEGATIVEN AKTIVEN MATERIALS FÜR EINE LITHIUM-SEKUNDÄRBATTERIE, NEGATIVES AKTIVES MATERIAL FÜR EINE LITHIUM-SEKUNDÄRBATTERIE UND LITHIUM-SEKUNDÄRBATTERIE, DIE DIESES NEGATIVE AKTIVE MATERIAL ENTHÄLT

PROCÉDÉ DE FABRICATION D'UN MATÉRIAU ACTIF NÉGATIF POUR UNE BATTERIE SECONDAIRE AU LITHIUM, MATÉRIAU ACTIF NÉGATIF POUR UNE BATTERIE SECONDAIRE AU LITHIUM, ET BATTERIE SECONDAIRE AU LITHIUM CONTENANT CE MATÉRIAU ACTIF NÉGATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2019 KR 20190171448**

(43) Date of publication of application:
**26.10.2022 Bulletin 2022/43**

(73) Proprietors:
- **POSCO**
  **Pohang-si, Gyeongsangbuk-do 37859 (KR)**
- **Research Institute of Industrial Science & Technology**
  **Pohang-si, Gyeongsangbuk-do 37673 (KR)**

(72) Inventors:
- **KIM, Yong Jung**
  **Pohang-si, Gyeongsangbuk-do 37673 (KR)**
- **CHO, Moonkyu**
  **Pohang-si, Gyeongsangbuk-do 37671 (KR)**
- **YOU, Seung Jae**
  **Pohang-si, Gyeongsangbuk-do 37655 (KR)**
- **WOO, Jung Gyu**
  **Pohang-si, Gyeongsangbuk-do 37671 (KR)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(74) Representative: **Pfenning, Meinig & Partner mbB**
**Patent- und Rechtsanwälte**
**Theresienhöhe 11a**
**80339 München (DE)**

(56) References cited:
**EP-A1- 2 610 949** **EP-A1- 3 046 167**
**JP-A1- WO2012 077 268** **KR-A- 20110 080 367**
**KR-A- 20160 057 634** **KR-A- 20160 113 981**
**KR-A- 20160 137 518** **KR-A- 20180 075 106**

- **DATABASE WPI Week 201242, Derwent World Patents Index; AN 2012-G82092, XP002809257**

(52) Cooperative Patent Classification (CPC): (Cont.)
Y02E 60/10

## Description

## BACKGROUND OF THE INVENTION

### (a) Field of the Invention

Disclosed are a manufacturing method of a negative active material for a lithium secondary battery, a negative active material for a lithium secondary battery manufactured by this method, and a lithium secondary battery including the negative active material.

### (b) Description of the Related Art

A lithium ion secondary battery (lithium ion secondary battery, LIB) is receiving a lot of attention as a next-generation energy storage device while environmental issues are becoming an international issue. Compared to typical secondary battery systems such as nickel cadmium batteries and nickel metal hydride batteries, lithium ion secondary batteries have excellent characteristics in terms of high operation voltage and energy density and memory effects, so they are being broadly applied to various applications. As the demand for a high energy density secondary battery such as Ni-Cd battery and nickel metal hydride battery increases, the use of silicon-based or silicon oxide-based materials having an effective capacity 10 times or more than that of carbon-based materials is increasing as an negative electrode active material for lithium secondary batteries.

A lithium ion secondary battery is composed of a positive electrode, a negative electrode, a separator and an electrolyte, so the performance of the battery is closely related to all the characteristics of the constituent elements. Among them, for the negative active material constituting the negative electrode, hard carbon/soft carbon or graphite-based material, which is a carbon material, has been used for nearly 30 years since 1991, when the lithium ion secondary battery was developed. Currently, most commercial batteries mainly use graphite material, and various combinations of graphite compositions are applied depending on the battery maker.

Graphite material, which is currently most commonly used as a negative active material for lithium ion secondary batteries, has merit in terms of low working voltage, stable cycle-life characteristic, efficiency, price, and environmentally-friendly merit. However, there is a drawback that the theoretical capacity is limited to a maximum of 372mAh/g. Due to the limitations of the theoretical capacity, it is difficult to secure the mileage of electric vehicles, and there are also problems that it is difficult to apply to various fields of application.

As a next-generation material considered to overcome the capacity of graphite, oxides of various elements and Group 4 elements represented by Si are included. Among them, Si is being actively considered as a high-capacity active material candidate from the viewpoint of price and versatility.

Theoretically, silicon-based negative active material has a capacity more than 10 times higher than commercially available graphite-based negative active material. However, when the silicon-based negative active material is charged, the volume change reaches 400%. Due to the stress (strain) generated during discharge, there is a problem of battery performance deterioration due to short circuit with the current collector and collapse of the electrode itself. There is a problem that it is difficult to be commercially available. That is, in the silicon-based negative active material, the Si crystal structure is repeatedly changed electrochemically during charging and discharging, and thus the expansion/contraction of the active material is repeated. Accordingly, the conductive network is lost due to the collapse and deformation of the active material particles. As the local inertness in the electrode is amplified, the non-reversible capacitance and cycle characteristic deteriorate. In addition, when the formation of SEI is considered, fractures or crack occurs on the SEI surface formed due to the contraction/expansion of the electrode, and a new surface is exposed according to the occurrence of the fracture and crack. As the charging and discharging proceed, the occurrence of fractures and cracks accelerates, and as a new surface is continuously exposed, the non-surface area increases even more. The newly exposed surface is in contact with the electrolyte solution again, and a new SEI is formed and grows repeatedly. As a result, the battery characteristics are significantly degraded through an increase in the diffusion path of lithium ion, an increase in electrolyte solution consumption, conductive deterioration, reduction of coulomb efficiency, consumption of lithium source, and an increase in resistance. Ultimately, the result is that the battery cannot be used.

This problem also occurs when using a composite active material of Si and carbon. Therefore, a method to suppress an expansion and a continuous formation of and SEI was researched. As the method, the method to minimize the non-surface area by the high-pressure molding process basically and the method to suppress the mechanical expansion and control the non-surface area by forming an additional coating layer on the outside were proposed. That is, a method for structurally densifying and a method for introducing a mechanical auxiliary structure have been proposed.

Kim (ACS applied Materials & Interfaces 2016, 8, 12109-12117) of KETI suggests a method of forming a pitch coating layer on the active material surface. By forming the pitch coating, the electrical conductivity of the entire active material is improved and acts as an electron transport network. The micropores present in the pitch-based carbon facilitate

the diffusion of Li ions. It describes the merit of improving structural stability due to the elasticity characteristic of pitch-based carbon coating. In addition, France's CNRS (RSC Adv., 2019, 9, 10546-10553) introduces pitch as a carbon source of Si-carbon composite active material, and emphasizes the low price of pitch as a strength.

However, in the negative active material market, the price competition is heating up year by year, so it is necessary to minimize the unit price in the active material dimension.

EP 2610949 A1 discloses a negative-electrode material powder for a lithium-ion secondary battery including a conductive carbon film on the surface of a lower silicon oxide powder, in which the total content of tar components measured by TPD-MS is not less than 1 ppm by mass and not more than 4000 ppm by mass, and in the Raman spectrum, peaks exist at 1350 cm -1 and 1580 cm -1, while the peak at 1580 cm -1 has a half-value width of not less than 50 cm -1 and not more than 100 cm -1. In the negative-electrode material powder, a specific surface area measured by the BET method is preferably not less than 0.3 m 2 /g and not more than 40 m 2 /g, and the proportion of the conductive carbon film is preferably not less than 0.2 mass% and not more than 10 mass%. A specific resistance of the lower silicon oxide powder is preferably not more than 40000 ©cm, and a maximum value P1 of SiO x -incurred halos and a value P2 of the strongest line peak of Si (111) preferably satisfy a relationship of P2/P1<0.01 in XRD measurement.

EP 3046167 A1 discloses a negative active material for a rechargeable lithium battery, a method of preparing a negative active material for a rechargeable lithium battery, and a rechargeable lithium battery, the negative active material including a silicon-graphite composite, wherein the silicon-graphite composite includes a graphite particle, a silicon particle inside the graphite particle, and amorphous carbon inside the graphite particle.

DATABASE WPI, 0, Derwent World Patents Index, vol. 2012, no. 42, Database accession no. 2012-G82092, XP002809257 & WO2012077268 A1 20120614 (OSAKA TITANIUM TECHNOLOGIES CO LTD) [X] 1,11,15 * abstract * * citations refer to the machine translation of JP5648070B into English; paragraphs [0038] , [0 54] , [0055] , [0069] , [0070] * [I] 2-10,12-14 discloses a negative active material for a lithium secondary battery comprising a core comprising Si and an amorphous carbon positioned on the core surface.

## SUMMARY OF THE INVENTION

One aspect of the invention is to provide a manufacturing method of a negative active material for a lithium secondary battery having a small specific surface area.

Another aspect is to provide a negative active material for a lithium secondary battery manufactured by the manufacturing method.

Another aspect is to provide a lithium secondary battery including a negative active material manufactured by the method.

The invention is as defined in the claims hereof.

The manufacturing method of a negative active material for a lithium secondary battery according to an embodiment is an economical process, and an active material having a small specific area can be manufactured.

## BRIEF DESCRIPTION OF THE DRAWINGS

FIG. 1 is a drawing schematically showing the structure of a lithium secondary battery according to the invention.

## DETAILED DESCRIPTION OF THE EMBODIMENTS

Hereinafter, an embodiment of the invention will be described in detail. However, this is provided as an example, and the invention is not limited thereto, and the present invention is only defined by the scope of the claims.

A method of manufacturing a negative active material for lithium secondary battery according to the invention comprises: coating a negative active material precursor containing Si with crude tar or soft pitch; and annealing an obtained coating product, wherein, the crude tar contains a low molecular weight component that can be removed by a distillation process in an amount of 20 wt% or less.

Hereinafter, each step will be described in detail.

First, a negative active material precursor containing Si is coated with crude tar or soft pitch.

The crude tar refers to coal tar in its state obtained in the ironmaking process. As described above, the crude tar refers to tar having a content of 20 wt% or less of a low molecular weight component.

The low molecular weight component is a component that can be recovered by the distillation process, and has a weight average molecular weight (Mw) of 78 to 128. The content of the low molecular weight component is 20 wt% or less, and may be 15 wt% to 20 wt%.

The low molecular weight component may include naphthalene, a low boiling point component having a boiling point lower than the boiling point of naphthalene, and a high boiling point component having a boiling point higher than the boiling point of naphthalene.

The low boiling point component having a boiling point lower than the boiling point of the naphthalene may be, for example, pyridine, trimethylbenzene, cresol, or a combination thereof, and may further include a component having a low boiling point other than that of the naphthalene. The content of the low boiling point component may be 13 wt% to 16 wt%.

The component having a higher boiling point than the naphthalene may be, for example, 9H-fluorene, isoquinoline, methylnaphthalene, 2-methylnaphthalene, dimethylnaphthalene, trimethylnaphthalene or combination thereof, and may further include a component having a higher boiling point have. The content of the high boiling point component may be 2 wt% to 7 wt%.

Particularly, the crude tar contains methylnaphthalene, 2-methylnaphthalene, dimethylnaphthalene, trimethylnaphthalene, or these in an amount of 1.5 wt% to 3 wt%, among high boiling point components, unlike commonly used tar.

The crude tar according to an embodiment may include a pitch as the remaining content. That is, a crude tar includes a low molecular weight component and a soft pitch, and in general, when the low molecular weight component is removed by distillation, it is called a soft pitch. Therefore, the soft pitch used in the coating step refers to the components remaining after distilling and removing the low molecular weight component from the crude tar.

The negative active material precursor including the Si generally refers to a Si-based material used as a negative active material for a lithium secondary battery, and may be, for example, Si, a Si-C composite, Si oxide, or a combination thereof. In this case, the Si oxide may be $SiOx(0 < x < 2)$. The Si-C composite may include silicon particles and crystalline carbon, and may include silicon particles, amorphous carbon and crystalline carbon.

The amorphous carbon may include a soft carbon or a hard carbon, a mesophase pitch carbide, a calcined coke, and the like. In addition, the crystalline carbon may include a natural graphite, an artificial graphite, or combination thereof.

In one embodiment, as the negative active material precursor containing the Si, a Si-C composite may be appropriately used, and the Si-C composite including silicon particles, amorphous carbon and crystalline carbon can be used more appropriately due to a higher initial efficiency and a higher design capacity than that of SiOx. At this time, with respect to 100 wt% of the negative active material precursor, silicon may be 30 wt% to 50 wt%, amorphous carbon 20 wt% to 35 wt%, and crystalline carbon 20 wt% to 35 wt%. The Si-C composite including silicon particles, amorphous carbon and crystalline carbon may be formed by mixing Si and crystalline carbon, adding an amorphous carbon precursor to this mixture, molding, and carbonizing the obtained molded body. Examples of the amorphous carbon precursor include coal-based pitch, coal-based binder pitch, petroleum-based pitch, mesophase pitch, tar, low molecular weight heavy oil, furan resin, and the like. In addition, the molding process can be carried out by applying a pressure of 100 tons/$cm^2$ to 300 tons/$cm^2$, and the carbonization process can be carried out by heat treatment at 800°C to 950°C.

In the step of coating with the crude tar or the soft pitch, a weight ratio between the negative active material precursor and the crude tar or the soft pitch may be 2 wt% to 20 wt% with respect to 100 wt% of the negative active material precursor. If the amount of crude tar or soft pitch is included in the range, it can significantly reduce the specific surface area of the manufactured negative active material, suppress the formation of SEI, and thus have merit in improving cycle-life-characteristics.

At the step of coating with the crude tar or the soft pitch, the crude tar can be used as a solid or liquid. That is, by adding crude tar or soft pitch to a solvent, the coating step can be performed by the liquid method using a coating solution having a concentration of 50 wt% to 70 wt%. As such, when the crude tar or soft pitch is added to the solvent and used, the viscosity of the crude tar or soft pitch can be controlled, so that the coating process can be performed more easily. In one embodiment, the concentration of the coating solution may be 50 wt% to 70 wt%, and when the concentration of the coating solution is included in the range, it has a sufficient effect of reducing the specific surface area, but at a concentration lower than this, it cannot achieve a sufficient effect due to a volatilized solvent.

The solvent may be N-methyl pyrrolidone, dimethylformaldehyde, dimethyl sulfoxide, tetrahydrofuran, acetone, or combination thereof.

In the step of coating with the crude tar or the soft pitch, the negative active material precursor and crude tar or soft pitch are mixed, and this mixture can be stirred for 10 to 60 minutes at a speed of 50 rpm to 100 rpm. In addition, the mixing process may be performed for 20 to 40 minutes. When the mixing process includes mixing at the specified speed, it can have merit of improving the specific surface area by forming a sufficient coating layer, and when it is carried out for the specified time, it has a trend of gradually decreasing the specific surface area according to time change. If it is out of the mixing speed and time range, it does not have a sufficient effect of reducing the specific surface area, but rather has the opposite result of increasing.

In addition, before the mixing process, a pre-mixing process may be further performed.

Then, the obtained coating product is heat treated. The heat treatment step can be carried out at 800°C to 950°C for 0.5 hours to 2 hours. The step of annealing an obtained coating product is performed by raising a temperature to a final temperature of 950 °C or less, for example 800 °C to 950 °C, at a temperature increase speed of 2 °C / min to 10 °C / min. The step of annealing an obtained coating product is performed by raising a temperature firstly to 300°C to 400°C at a temperature increase speed of 2°C/min to 10°C/min, holding it at this temperature for 0.5 hours to 2 hours, and then raising a temperature secondly to a final temperature of 950°C or less at a temperature increase rate of 2°C/min to 10°C/min.

According to the heat treatment process, the crude tar or soft pitch can be converted to amorphous carbon and

positioned on the surface of core.

Another embodiment provides a negative active material for lithium secondary battery, comprising: a core comprising Si, prepared by the method according to the embodiment; and an amorphous carbon positioned on the core surface, wherein a specific surface area is 1 $m^2$ / g to 6 $m^2$ /g. If the negative active material BET area is included in the range, SEI formation on the surface can be suppressed and the cycle characteristic can be improved resultantly.

The core is an Si-C composite. The span value is 1.41 or less The Si-C composite may include a silicon particle and a crystalline carbon, and may include a silicon particle, an amorphous carbon and a crystalline carbon.

The amorphous carbon positioned on the core surface can be a crude tar or soft carbon with a soft pitch converted.

The amorphous carbon may exist as a layer-type continuously covering the core surface, or may exist as an island-type discontinuously positioned on the core surface.

The content of the amorphous carbon may be 2 wt% to 20 wt% with respect to 100 wt% of the negative active material. When the content of amorphous carbon is included in the range, sufficient capacity is expressed and it can have merit with excellent cycle characteristic. The soft carbon implemented in the above process has a very low capacity compared to Si and a crystalline carbon contained in the core, so it may be appropriate to improve performance by using a small amount of the range to control a specific surface area.

According to one embodiment, a lithium secondary battery including a negative electrode, a positive electrode and an electrolyte is provided.

The negative electrode may include a negative active material layer including the negative active material according to an embodiment, formed on a current collector.

In the negative active material layer, the content of the negative active material in the negative active material layer may be 80 wt% to 98 wt% with respect to the entire weight of the negative active material layer.

The negative active material layer includes a binder, and may optionally further include a conductive material. The content of the binder in the negative active material layer may be 1 wt% to 5 wt% based on the entire weight of the negative active material layer. Also, when the conductive material is further included, 90 wt% to 98 wt% of the negative active material, 1 wt% to 5 wt% of the binder, and 1 wt% to 5 wt% of the conductive material may be used.

The binder well adheres the negative active material particles to each other, and also serves to attach the negative active material to the current collector. As the binder, a non-aqueous binder, an aqueous binder, or a combination thereof can be used.

The non-aqueous binders can include ethylene propylene copolymer, polyacrylnitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or combination thereof.

As the aqueous binder, it may be or include styrene-butadiene rubber, acrylated styrene-butadiene rubber, acrylonitrile-butadiene rubber, acryl rubber, butyl rubber, fluoro rubber, ethylene oxide-containing polymer, polyvinylpyrrolidone, Polyepichlorohydrin, polyphosphazene, ethylenepropylene diene copolymer, polyvinylpyridine, chlorosulfonated polyethylene, latex, polyester resin, acryl resin, phenol resin, epoxy resin, polyvinyl alcohol or combinations thereof.

When an aqueous binder is used as the negative electrode binder, a cellulose-based compound capable of imparting viscosity may be further included. As this cellulose-based compound, one or more types of carboxymethyl cellulose, hydroxypropylmethyl cellulose, methyl cellulose, or alkali metal salts thereof can be mixed and used. As the alkali metal, Na, K or Li can be used. The content of this thickener used may be 0.1 parts by weight to 3 parts by weight based on 100 parts by weight of the negative active material.

The conductive material is used to impart conductivity to the electrode, and any electronic conductive material can be used without causing chemical change in the battery. Examples of the conductive material include carbon-based materials such as natural graphite, artificial graphite, carbon black, acetylene black, Ketjen black, and carbon fiber; metal-based materials such as metal powder or metal fibers such as copper, nickel, aluminum, and silver; conductive polymers such as polyphenylene derivatives; or a conductive material containing a mixture thereof.

As the current collector, one selected from the group consisting of copper foil, nickel foil, stainless steel foil, titanium foil, nickel foam, copper foam, a polymer substrate coated with conductive metal, and combinations thereof may be used.

The negative electrode is formed by mixing a negative active material, a binder and optionally a conductive material in a solvent to prepare an active material composition, and coating this active material composition on a current collector. Water can be used as the solvent.

Since such a negative electrode forming method is widely known in the art, a detailed description in this specification will be omitted.

The positive electrode includes a current collector and a positive electrode active material layer comprising a positive electrode active material formed on the current collector.

The positive electrode active material may include a compound capable of reversible intercalation and deintercalation of lithium (lithiated intercalation compound). Specifically, at least one of a metal selected from cobalt,

manganese, nickel, and combination thereof and a composite oxide of lithium may be used. As a more specific example, a compound represented by any one of the following Chemical Formulas may be used. $Li_aA_{1-b}X_bD_2$ ($0.90 \leq a \leq 1.8, 0 \leq b \leq 0.5$); $Li_aA_{1-b}X_bO_{2-c}D_c$ ($0.90 \leq a \leq 1.8, 0 \leq b \leq 0.5, 0 \leq c \leq 0.05$); $Li_aE_{1-b}X_bO_2\text{-}_cD_c$ ($0 \leq b \leq 0.5, 0 \leq c \leq 0.05$); $Li_aE_{2-b}X_bO_{4-c}D_c$ ($0 \leq b \leq 0.5, 0 \leq c \leq 0.05$); $Li_aNi_{1-b-c}Co_bX_cD_\alpha$ ($0.90 \leq a \leq 1.8, 0 \leq b \leq 0.5, 0 \leq c \leq 0.5, 0 < \alpha \leq 2$); $Li_aNi_{1-b-c}Co_bX_cO_{2-\alpha}T_\alpha$ ($0.90 \leq a \leq 1.8, 0 \leq b \leq 0.5, 0 \leq c \leq 0.05, 0 < \alpha < 2$); $Li_aNi_{1-b-c}Co_bX_cO_{2-\alpha}T_2$ ($0.90 \leq a \leq 1.8, 0 \leq b \leq 0.5, 0 \leq c \leq 0.05, 0 < \alpha < 2$); $Li_aNi_{1-b-c}Mn_bX_cD_\alpha$ ($0.90 \leq a \leq 1.8, 0 \leq b \leq 0.5, 0 \leq c \leq 0.05, 0 < \alpha \leq 2$); $Li_aNi_{1-b-c}Mn_bX_cO_{2-\alpha}T_\alpha$ ($0.90 \leq a \leq 1.8, 0 \leq b \leq 0.5, 0 \leq c \leq 0.05, 0 < \alpha < 2$); $Li_aNi_{1-b-c}Mn_bX_cO_{2-\alpha}T_2$ ( $0.90 \leq a \leq 1.8, 0 \leq b \leq 0.5, 0 \leq c \leq 0.05, 0 < \alpha < 2$); $Li_aNi_bE_cG_dO_2$ ($0.90 \leq a \leq 1.8, 0 \leq b \leq 0.9, 0 \leq c \leq 0.5, 0.001 \leq d \leq 0.1$); $Li_aNi_bCo_cMn_dGeO_2$ ($0.90 \leq a \leq 1.8, 0 \leq b \leq 0.9, 0 \leq c \leq 0.5, 0 \leq d \leq 0.5, 0.001 \leq e \leq 0.1$); $Li_aNiG_bO_2$ ($0.90 \leq a \leq 1.8, 0.001 \leq b \leq 0.1$); $Li_aCoG_bO_2$ ($0.90 \leq a \leq 1.8, 0.001 \leq b \leq 0.1$); $Li_aMn_{1-b}G_bO_2$ ($0.90 \leq a \leq 1.8, 0.001 \leq b \leq 0.1$); $Li_aMn_2G_bO_4$ ($0.90 \leq a \leq 1.8, 0.001 \leq b \leq 0.1$); $Li_aMn_{1-g}G_gPO_4$ ($0.90 \leq a \leq 1.8, 0 \leq g \leq 0.5$); $QO_2$; $QS_2$; $LiQS_2$; $V_2O_5$; $LiV_2O_5$; $LiZO_2$; $LiNiVO_4$; $Li_{(3-f)}J_2\ PO_{43}$ ($0 \leq f \leq 2$); $Li_{(3-f)}Fe_2\ PO_{43}$ ($0 \leq f \leq 2$); $Li_aFePO_4$ ($0.90 \leq a \leq 1.8$)

In the Chemical Formula, A is selected from the group consisting of Ni, Co, Mn, and combination thereof; X is selected from the group consisting of Al, Ni, Co, Mn, Cr, Fe, Mg, Sr, V, rare earth elements and combination thereof; D is selected from the group consisting of O, F, S, P, and combination thereof; E is selected from the group consisting of Co, Mn, and combination thereof; T is selected from the group consisting of F, S, P, and a combination thereof; G is selected from the group consisting of Al, Cr, Mn, Fe, Mg, La, Ce, Sr, V, and combination thereof; Q is selected from the group consisting of Ti, Mo, Mn, and combination thereof; Z is selected from the group consisting of Cr, V, Fe, Sc, Y, and combination thereof; J is selected from the group consisting of V, Cr, Mn, Co, Ni, Cu, and combination thereof.

Of course, a compound having a coating layer on the surface of the compound can be used, or a mixture of the compound and a compound having a coating layer can be used. The coating layer contains at least one coating element compound selected from the group consisting of oxide of coating element, hydroxide of coating element, oxyhydroxide of coating element, oxycarbonate of coating element and hydroxycarbonate of coating element. The compound constituting these coating layers may be amorphous or crystalline. As a coating element included in the coating layer, Mg, Al, Co, K, Na, Ca, Si, Ti, V, Sn, Ge, Ga, B, As, Zr or mixture thereof may be used. In the coating layer forming process, these elements can be used in the compound and coated by a method (e.g., spray coating, dipping method, etc.) that does not adversely affect the physical properties of the positive electrode active material. In this case, any coating method may be used, and detailed description thereof will be omitted since it is a content that can be well understood by those in the field.

In the positive electrode, the content of the positive electrode active material may be 90 wt% to 98 wt% with respect to the entire weight of the positive electrode active material layer.

In one embodiment, the positive electrode active material layer may further include a binder and a conductive material. At this time, the content of the binder and the conductive material may be 1 wt% to 5 wt%, respectively, based on the entire weight of the positive electrode active material layer.

The binder well adheres the positive active material particles to each other, and also serves to attach the positive active material to the current collector. Representative, non-limiting examples of the binder include polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, etc. can be used.

The conductive material is used to impart conductivity to the electrode, and any electronically conductive material can be used without causing chemical change in the battery. Examples of the conductive material include carbon-based materials such as natural graphite, artificial graphite, carbon black, acetylene black, Ketjen black, and carbon fiber; metal-based materials such as metal powder or metal fibers such as copper, nickel, aluminum, and silver; conductive polymers such as polyphenylene derivatives; or a conductive material containing mixture thereof.

Aluminum foil, nickel foil or combination thereof may be used as the current collector, but the invention is not limited thereto.

The positive electrode active material layer is formed by mixing a positive electrode active material, binder and conductive material in solvent to prepare an active material composition, and applying this active material composition to a current collector. Since such an active material layer forming method is widely known in the art, a detailed description in this specification will be omitted. As the solvent, N-methylpyrrolidone and the like can be used, but the invention is not limited thereto.

The electrolyte includes a non-aqueous organic solvent and lithium salt.

The non-aqueous organic solvent serves as a medium through which ions involved in the electrochemical reaction of the battery can move.

As the non-aqueous organic solvent, carbonate-based, ester-based, ether-based, ketone-based, alcohol-based, or aprotic solvents can be used.

As the carbonate-based solvent, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), etc. may be used. As the ester-based solvent, methyl acetate,

ethyl acetate, n-propyl acetate, dimethyl acetate, methyl propionate, ethyl propionate, propyl propionate, decanolide, mevalonolactone, caprolactone and the like may be used. As the ether-based solvent, dibutyl ether, tetraglyme, diglyme, dimethoxyethane, 2-methyltetrahydrofuran, tetrahydrofuran, etc. may be used. In addition, as the ketone-based solvent, cyclohexanone and the like may be used.

In addition, as the alcohol-based solvent, ethyl alcohol, isopropyl alcohol, etc. may be used. As the aprotic solvent, nitriles such as R-CN (R is a hydrocarbon group having a linear, branched, or ring structure having 2 to 20 carbon atoms, and may include a double bond aromatic ring or ether bond) can be used

Alternatively, amides such as dimethylformamide, dioxolanes such as 1,3-dioxolane, sulfolanes, etc. may be used.

The non-aqueous organic solvent can be used alone or in combination of one or more. When one or more are mixed and used, the mixing ratio can be appropriately adjusted according to the desired battery performance, which can be widely understood by those skilled in the art.

In addition, in the case of the carbonate-based solvent, it is recommended to use a mixture of a cyclic carbonate and a chain carbonate. In this case, when the cyclic carbonate and the chain carbonate are mixed in a volume ratio of 1:1 to 1:9, the electrolyte solution can exhibit excellent performance.

When the non-aqueous organic solvent is mixed and used, a mixed solvent of a cyclic carbonate and a chain carbonate; mixed solvent of cyclic carbonate and propionate solvent; or a mixed solvent of cyclic carbonate, chain carbonate, and propionate solvent; can be used. As the propionate solvent, methyl propionate, ethyl propionate, propyl propionate or combination thereof can be used.

In this case, when a cyclic carbonate and a chain carbonate; or a cyclic carbonate and a propionate-based solvent; are mixed and used, the electrolyte solution performance may be excellent when mixed in a volume ratio of 1:1 to 1:9. In addition, when using a mixture of a cyclic carbonate, a chain carbonate, and a propionate-based solvent, it can be used by mixing in a ratio of 1:1:1 to 3:3:4 volume. Of course, the mixing ratio of the solvents can be appropriately adjusted according to the desired properties.

The non-aqueous organic solvent may further include an aromatic hydrocarbon-based organic solvent in the carbonate-based solvent. At this time, the carbonate-based solvent and the aromatic hydrocarbon-based organic solvent may be mixed in a volume ratio of 1:1 to 30:1.

As the aromatic hydrocarbon-based organic solvent, an aromatic hydrocarbon-based compound of Chemical Formula 1 below may be used.

[Chemical Formula 1]

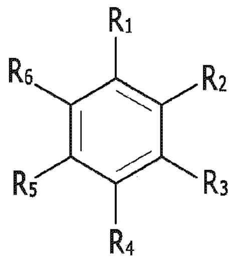

(In the Chemical Formula 1, $R_1$ to $R_6$ are the same as or different from each other and are selected from the group consisting of hydrogen, halogen, an alkyl group having 1 to 10 carbon atoms, a haloalkyl group and combination thereof.)

Specific examples of the aromatic hydrocarbon-based organic solvent include benzene, fluorobenzene, 1,2-difluorobenzene, 1,3-difluorobenzene, 1,4-difluorobenzene, 1,2,3 -Trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene , 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4- trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further contain vinylene carbonate or ethylene carbonate-based compound of Chemical Formula 2 below as cycle-life improving additives to improve battery cycle-life.

[Chemical Formula 2]

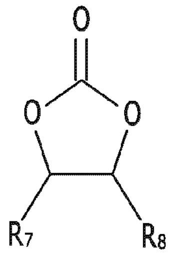

(In the Chemical Formula 2, $R_7$ and $R_8$ are the same as or different from each other, and are selected from the group consisting of hydrogen, a halogen group, a cyano group (CN), a nitro group $NO_2$, and a fluorinated alkyl group having 1 to 5 carbon atoms, and at least one of $R_7$ and $R_8$ is selected from the group consisting of a halogen group, a cyano group (CN), a nitro group ($NO_2$) and a fluorinated alkyl group having 1 to 5 carbon atoms, but $R_7$ and $R_8$ are not both hydrogen.)

Representative examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate or fluoroethylene carbonate. If these cycle-life improve additives are further used, their amount can be appropriately adjusted.

The electrolyte may further contain vinylethylene carbonate, propane sultone, succinonitrile or combination thereof, and the amount used can be appropriately adjusted.

The lithium salt is dissolved in an organic solvent and acts as a supply source of lithium ion in the battery, enabling basic lithium secondary battery operation, and is a material that promotes the movement of lithium ions between the positive and negative electrodes.

Representative examples of such lithium salts include one or two or more selected from the group consisting of $LiPF_6$, $LiBF_4$, $LiSbF_6$, $LiAsF_6$, LiN $(SO_2C_2F_5)_2$, Li $(CF_3SO_2)_2N$, LiN $(SO_3C_2F_5)_2$, $LiC_4F_9SO_3$, $LiClO_4$, $LiAlO_2$, $LiAlCl_4$, LiN $(C_xF_{2x+1}SO_2$, $C_yF_{2y+1}SO_2$, x and y are natural numbers, such as an integer of 1 to 20), LiCl, LiI and LiB $C_2O_{42}$(lithium bis(oxalato) borate: LiBOB) as a supporting electrolytic salt. It is recommended to use the lithium salt concentration within the range of 0.1M to 2.0M. When the concentration of lithium salt is in the range, the electrolyte has appropriate conductivity and viscosity, so it can exhibit excellent electrolyte performance, and lithium ions can move effectively.

Depending on the type of lithium secondary battery, a separator may exist between the positive and negative electrodes. As such a separator, polyethylene, polypropylene, polyvinylidene fluoride, or a multilayer of two or more layers thereof may be used. A mixed multilayer such as a polyethylene/polypropylene two-layer separator, a polyethylene/polypropylene/polyethylene three-layer separator, and a polypropylene/polyethylene/polypropylene three-layer separator can be used.

FIG. 1 shows an exploded perspective view of a lithium secondary battery according to an embodiment of the present invention. Although the lithium secondary battery according to an embodiment is described as having a prismatic shape as an example, the present invention is not limited thereto, and may be applied to various types of batteries such as cylindrical and pouch-type batteries.

Referring to FIG. 1, the lithium secondary battery 100 according to an embodiment may include an electrode assembly 40 wound with a separator 30 interposed between the positive electrode 10 and the negative electrode 20, and a case 50 in which the electrode assembly 40 is built. The positive electrode 10, the negative electrode 20 and the separator 30 may be impregnated in an electrolyte solution (not shown).

## DETAILED DESCRIPTION OF THE INVENTION

An exemplary embodiment of the present invention and Comparative Example are described below. The following exemplary embodiment is non-limiting of the present invention.

(Comparative Example 1)

Poly-Si was pulverized using a wet mill using isopropyl alcohol solvent to have a D50 of 200 nm or less to prepare a Si solution.

The prepared Si solution and high-purity natural graphite having a D50 of 3 μm or less were added and mixed, followed by a spray drying process to prepare a composite sphere having a D90 of 30 μm or less.

The prepared composite spheres and a coal-based binder pitch having a D50 of 3 μm or less were put into mechano fusion equipment to prepare a composite. At this time, the amount of Si, pitch and natural graphite was used to be

37.9 wt% of Si, 35.2 wt% of pitch and 26.9 wt% of natural graphite in the prepared composite.

A molded body was manufactured at a pressure of 1.8 ton/$cm^2$ by using the press molding equipment for the prepared composite. A carbonization process of heat treatment of the manufactured molded body at 950 °C was performed. In this carbonization process, the internal low molecular weight organic material is removed and the pitch is converted to soft carbon. The prepared carbonized body was pulverized to a D50 of about 15 μm using a jet mill, and sieved. The classified product was used as a negative active material. The BET specific surface area of this negative active material was 12.2 $m^2$/g.

(Exemplary embodiment 1)

The classification product prepared in the Comparative Example 1 was used as a negative active material precursor.

Steps of mixing 100 wt% of the negative active material precursor and 20 wt% of crude tar, adding this mixture to mixer, and performing preliminary mixing for 5 minutes using a planetary mixer, followed by a coating process of mixing at 80 rpm for 30 minutes, were carried out.

The crude tar was used to contain 20 wt% of a low molecular weight component that can be removed by a distillation process. The low molecular weight components included pyridine, trimethylbenzene, cresol, naphthalene, methylnaphthalene, 2-methyl naphthalene, dimethylnaphthalene, trimethylnaphthalene, and 9H-fluorene. Among them, the total amount of methyl naphthalene, 2-methylnaphthalene, dimethylnaphthalene, and trimethylnaphthalene was 1.74 wt%.

After heating the obtained coating product to 950°C at a temperature increase speed of 10°C/min, heat treatment was performed to maintain it at 950°C for 1 hour. A core containing Si, soft carbon and graphite in a weight ratio of 37.9 : 35.2 : 26.9 and a negative active material containing soft carbon amorphous carbon positioned in layers on the core surface were prepared. At this time, the content of amorphous carbon was 10 wt% based on 100 wt% of the entire negative active material. The BET specific surface area of the prepared negative active material was 2.69 $m^2$/g.

(Comparative example 3)

The crude tar used in the exemplary embodiment 1 was added to N-methyl pyrrolidone solvent to prepare a crude tar solution of 89 wt% concentration.

The negative active material precursor and the crude tar liquid were pre-mixed for 5 minutes using a planetary mixer so that the crude tar was 10 wt% with respect to 100 wt% of the negative active material precursor prepared in the exemplary embodiment 1. Thereafter, a coating process of mixing at 80 rpm for 30 minutes was performed.
The obtained coating product was heated to 950°C at a temperature increase speed of 10°C/min, and then heat treatment was performed at 950°C for 1 hour. A negative active material containing a core containing Si, soft carbon, and graphite in a weight ratio of 37.9: 35.2: 26.9; and a soft carbon amorphous carbon positioned in layers on the core surface; were prepared. At this time, the ratio of amorphous carbon derived from crude tar was 1.8 wt% with respect to 100 wt% of the entire negative active material. The BET specific surface area of the negative active material was 4.64 $m^2$/g.

(Exemplary embodiment 3)

100 wt% of the negative active material precursor and 20 wt% of crude tar were mixed, and the mixture was pre-mixed for 5 minutes using a planetary mixer. After that, it was carried out in the same manner as in the exemplary embodiment 1 except that a coating process of mixing at 80 rpm for 60 minutes was performed. A negative active material containing a core containing Si, soft carbon, and graphite in a weight ratio of 37.9: 35.2: 26.9; and a soft carbon amorphous carbon positioned in layers on the core surface; were prepared. At this time, the content of amorphous carbon was 2.2 wt% based on 100 wt% of the entire negative active material. The BET specific surface area of the negative active material was 2.91 $m^2$/g.

(Comparative example 4)

The negative active material precursor and the crude tar liquid were pre-mixed for 5 minutes using a planetary mixer so that the crude tar was 20 wt% with respect to 100 wt% of the negative active material precursor prepared in the exemplary embodiment 1. After that, it was carried out in the same manner as in the comparative example 3, except that a coating process of mixing at 80 rpm for 60 minutes was performed. A negative active material containing a core containing Si, soft carbon, and graphite in a weight ratio of 37.9: 35.2: 26.9; and a soft carbon amorphous carbon positioned in layers on the core surface, were prepared. At this time, the content of amorphous carbon was 2.2 wt% based on 100 wt% of the entire negative active material. The BET specific surface area of the negative active material was 3.12 $m^2$/g.

(Comparative example 5)

100 wt% of the negative active material precursor and 20 wt% of crude tar were mixed, this mixture was added, and preliminary mixing was performed for 5 minutes using a planetary mixer. After that, it was carried out in the same manner as in the exemplary embodiment 1, except that a coating process of mixing at 120 rpm for 60 minutes was performed. A negative active material containing a core containing Si, soft carbon, and graphite in a weight ratio of 37.9: 35.2: 26.9; and a soft carbon amorphous carbon positioned in layers on the core surface, were prepared. At this time, the content of amorphous carbon was 2.2 wt% based on 100 wt% of the entire negative active material. The BET specific surface area of the negative active material was 3.48 $m^2/g$.

(Comparative example 6)

The crude tar used in the exemplary embodiment 1 was added to the N-methyl pyrrolidone solvent to prepare a crude tar solution of 12.5 wt% concentration.

The negative active material precursor and the crude tar liquid were pre-mixed for 5 minutes using a planetary mixer so that the crude tar was 10 wt% with respect to 100 wt% of the negative active material precursor prepared in the exemplary embodiment 1. Thereafter, a coating process of mixing at 80 rpm for 30 minutes was performed.

The obtained coating product was heated to 950°C at a temperature increase speed of 10°C/min, and then heat treatment was performed at 950°C for 1 hour. A negative active material containing a core containing Si, soft carbon and graphite in a weight ratio of 37.9: 35.2: 26.9; and a soft carbon amorphous carbon positioned in layers on the core surface, were prepared. At this time, the content of amorphous carbon was 4.4 wt% based on 100 wt% of the entire negative active material. The BET specific surface area of the negative active material was 5.72 $m^2/g$.

(Comparative example 7)

After performing preliminary mixing for 5 minutes, the method was carried out in the same manner as in the Example 6 except that a coating process of mixing at 80 rpm for 60 minutes was performed. A negative active material containing a core containing Si, soft carbon, and graphite in a weight ratio of 37.9: 35.2: 26.9; and a soft carbon amorphous carbon positioned in layers on the core surface, were prepared. At this time, the content of amorphous carbon was 4.4 wt% based on 100 wt% of the entire negative active material. The BET specific surface area of the negative active material was 5.38 $m^2/g$.

(Comparative example 8)

After performing preliminary mixing for 5 minutes, the method was carried out in the same manner as in the Example 6 except that a coating process of mixing at 80 rpm for 90 minutes was performed. A negative active material containing a core containing Si, soft carbon and graphite in a weight ratio of 37.9: 35.2: 26.9; and a soft carbon amorphous carbon positioned in layers on the core surface, were prepared. At this time, the content of amorphous carbon was 4.4 wt% based on 100 wt% of the entire negative active material. The BET specific surface area of the negative active material was 5.45 $m^2/g$.

(Comparative example 9)

After performing the preliminary mixing for 5 minutes, the method was carried out in the same manner as in the Example 6 except that a coating process of mixing at 80 rpm for 120 minutes was performed. A negative active material containing a core containing Si, soft carbon, and graphite in a weight ratio of 37.9: 35.2: 26.9; and a soft carbon amorphous carbon positioned in layers on the core surface, were prepared. At this time, the content of amorphous carbon was 4.4 wt% based on 100 wt% of the entire negative active material. The BET specific area of the negative active material was 4.95 $m^2/g$.

**Particle size distribution measurement**

For the negative active material of the Comparative Example 1 and the comparative examples 3 to 5, the particle sizes D1, D10, D50 and D90 were measured with a particle size analyzer (product name: Cilas 1090, manufacturer: Cilas), and the results are shown in Table 1 below. In this case, D1 means the diameter of the particle whose cumulative volume is 1 volume% in the particle size distribution, D10 is the diameter of the particle whose cumulative volume is 10 volume% in the particle size distribution, and D50 is the particle whose cumulative volume is 50 volume% in the particle size distribution, a diameter of D90 means the diameter of particles whose cumulative volume is 90 volume% in the particle

size distribution.

In addition, a span value was obtained from the measured D90, D10 and D50 values as in Equation 1 below, and the results are shown in Table 1 below.

[Equation 1]

$$Span = (D90-D10)/D50$$

The particle sizes D1, D10, D50 and D90 of the negative active material of the Comparative Example 2 and the comparative examples 6 to 9 were measured with a particle size analyzer (product name: Cilas 1090, manufacturer: Cilas), and the results are shown in Table 2 below. In addition, the span value was obtained, and the result is shown in Table 2 below.

**BET measurement**

After degassing the negative active material prepared according to the Comparative Example 1 and the exemplary embodiment 1 to 5 at 300 °C for 3 hours, the BET specific surface area was measured by the nitrogen gas adsorption BET method through the 3Flex device of Micromeritics, and then the results are shown in Table 1 below. When the BET value for the active material of Comparative Example 1 is 100%, the BET value ratio for the active material of exemplary embodiment 1 to 5 is obtained in %, that is, the active material BET of the exemplary embodiment active material BET/Comparative Example 1, is obtained. The result is shown in Table 1 below as the BET conversion rate.

In addition, the BET specific surface area of the negative active material manufactured according to the Comparative Example 2 and the comparative examples 6 to 9 was measured, and the results are shown in Table 2 below. When the BET value for the active material of Comparative Example 1 is 100%, the BET value ratio for the active material of exemplary embodiment 1 to 5 is obtained in %, that is, the active material BET of the exemplary embodiment active material BET/Comparative Example 1, is obtained. The results are shown in Table 1 below.

**Tap Density Measurement**

The tap density of the negative active material of the Comparative Example 2 and the comparative examples 6 to 9 was measured by the ISO3953 method, and the results are shown in Table 1 below.

(Table 1)

| | Mixing time | Particle size distribution | | | | Span | BET ($m^2/g$) | BET convert ratio (%) |
|---|---|---|---|---|---|---|---|---|
| | | D1(μm) | D10(μm) | D50(μm) | D90(μm) | | | |
| Comparative example 1 | - | 0.159 | 2.908 | 9.004 | 20.016 | 1.90 | 12.2 | 100 |
| Exemplary embodiment 1 | 30 min | 2.569 | 5.559 | 11.839 | 22.226 | 1.41 | 2.69 | 22.0 |
| Comparative example 3 | 30 min | 1.761 | 3.951 | 10.739 | 22.220 | 1.70 | 4.64 | 33.6 |
| Exemplary embodiment 3 | 60 min | 2.935 | 7.677 | 13.78 | 23.397 | 1.14 | 2.91 | 23.9 |
| Comparative example 4 | 90 min | 2.844 | 7.649 | 13.77 | 23.25 | 1.13 | 3.12 | 25.9 |
| Comparative example 5 | 120 min | 2.92 | 7.572 | 13.734 | 23.134 | 1.13 | 3.48 | 25.5 |

(Table 2)

| | Mixing time | Particle size distribution | | | | Span | BET ($m_2/g$) | BET conversion rate (%) | Tap density (g/cc) |
|---|---|---|---|---|---|---|---|---|---|
| | | D1(μm) | D10(μm) | D50 (μm) | D90(μm) | | | | |
| Comparative Example 2 | - | 0.201 | 3.302 | 10.443 | 21.291 | 1.72 | 13.8 | 100 | 0.43 |
| Comparative example 6 | 30 min | 2.038 | 3.880 | 9.825 | 22.523 | 1.90 | 5.72 | 41.4 | 0.71 |

(continued)

| | Mixing time | Particle size distribution | | | | Span | BET ($m_2/g$) | BET conversion rate (%) | Tap density (g/cc) |
|---|---|---|---|---|---|---|---|---|---|
| | | D1(μm) | D10(μm) | D50 (μm) | D90(μm) | | | | |
| Comparative example 7 | 60 min | 2.275 | 4.551 | 10.365 | 22.638 | 1.75 | 5.38 | 39.0 | 0.74 |
| Comparative example 8 | 90 min | 2.723 | 5.499 | 11.238 | 22.938 | 1.55 | 5.45 | 39.5 | 0.78 |
| Comparative example 9 | 120 min | 2.569 | 5.435 | 11.670 | 23.145 | 1.52 | 4.95 | 35.9 | 0.82 |

As shown in the Table 1, it can be seen that the span values of exemplary embodiments 1 and 3 coated with crude tar are smaller than Comparative Example 1 without coating. Also, it can be seen that the BET is significantly improved, and the particle size of the active material is uniformly controlled. In particular, it can be seen that the span values and BET conversion rates of exemplary embodiments 1 and 3 , and also in comparative example 5 coated with dry coating tar are smaller than those comparative examples 3 and 4 coated with wet coating tar.

In addition, in exemplary embodiment 1, and comparative examples 3 and 5 carried out by dry coating, it can be seen that the BET value of exemplary embodiment 1 in which the mixed coating process was performed for 30 minutes was the smallest.

In addition, as shown in the Table 2, it can be seen that the span values of exemplary embodiments 1 and 3, and comparative examples 3 to 5 coated with crude tar are smaller than Comparative Example 1 without coating, and BET is reduced.

In addition, as shown in the Table 2, the active material of exemplary embodiments 6 to 9 has a smaller span value than Comparative Example 2, so it can be seen that a uniform active material was manufactured. As a result, if the negative electrode is manufactured using this active material, the packing density can be improved. Accordingly, it can be predicted that a higher-capacity negative electrode can be manufactured. However, the results of exemplary embodiment 3-5 in Table 1, in which the crude tar input is increased to 20%, show that the improvement of the BET value is insufficient compared to the 10% crude tar input presented in Table 2, and it is somewhat inferior in terms of uniformity of particle size. This is inferred as a result obtained by remaining in the electrode active material particles by soft carbon derived from the injected crude tar.

## Claims

1. A method of manufacturing a negative active material for lithium secondary battery, comprising:

    coating precursors for a negative active material containing Si with crude tar or soft pitch; and
    annealing the resulting coating product,
    wherein, the crude tar contains a low molecular weight component that can be removed by a distillation process in an amount of 20 wt% or less and a weight ratio of the precursors for a negative active material and the crude tar or the soft pitch is 2 wt% to 20 wt% with respect to 100 wt% of the precursors for the negative active material, wherein the step of coating with the crude tar or the soft pitch is performed by:

        mixing the precursors for the negative active material and crude tar or soft pitch, and
        stirring the mixture at a speed of 50 rpm to 100 rpm for 10 minutes to 60 minutes.

2. The method of claim 1, wherein:
    the low molecular weight component has a weight average molecular weight (Mw) of 78 to 128.

3. The method of claim 1, wherein:

    in the step of the coating Si with the crude tar or the soft pitch,
    a coating solution prepared by adding crude tar or soft pitch to a solvent, at a concentration of 50 wt% to 70 wt%, is used.

4. The method of claim 3, wherein:
the solvent is N-methyl pyrrolidone, dimethylformaldehyde, dimethyl sulfoxide, tetrahydrofuran, acetone or combination thereof.

5. The method of claim 1, wherein:
the step of annealing a resulting coating product is carried out at 800°C to 950°C for 0.5 hours to 2 hours.

6. The method of claim 1, wherein:
the step of annealing a resulting coating product is performed by raising a temperature to a final temperature of 800 to 950 °C or less at a temperature increase speed of 2 °C / min to 10 °C / min.

7. The method of claim 1, wherein:
the step of annealing an obtained coating product is performed by:

raising a temperature first to 300°C to 400°C at a temperature increase speed of 2°C/min to 10°C/min, holding it at this temperature for 0.5 hours to 2 hours, and then
raising a temperature second to a final temperature of 800 to 950°C or less at a temperature increase rate of 2°C/min to 10°C/min.

8. The method of claim 1, wherein:
the precursor for a negative active material containing the Si is Si, Si-C composite, Si oxide or combination thereof.

9. A negative active material for lithium secondary battery, comprising:

a core comprising Si; and
an amorphous carbon positioned on the core surface;
wherein a Brunauer-Emmett-Teller (BET) specific surface area is 1 $m^2$ / g to 2.91 $m^2$/g,
wherein the core comprising Si is an Si-C composite,
wherein a span value is 1.41 or less.

10. The negative active material of claim 9, wherein:
the amorphous carbon exists as a layer that continuously covers the core surface.

11. The negative active material of claim 9, wherein:
the amorphous carbon exists as an island that is positioned discontinuously on the core surface.

12. The negative active material of claim 9, wherein:
the amorphous carbon is crude tar or soft pitch converted to amorphous carbon.

13. A lithium secondary battery, comprising:

a negative electrode comprising the negative active material of any one of claims 9 to 12;
a positive electrode comprising a positive electrode active material; and
a non-aqueous electrolyte.

**Patentansprüche**

1. Verfahren zur Herstellung eines negativen aktiven Materials für Lithium-Sekundärbatterien, umfassend:

Beschichtungsvorläufer für ein negatives aktives Material, das Si mit Rohteer oder Weichpech enthält; und
Tempern des resultierenden Beschichtungsprodukts,
wobei der Rohteer eine Komponente mit niedrigem Molekulargewicht enthält, die durch einen Destillationsprozess in einer Menge von 20 Gew.-% oder weniger entfernt werden kann, und das Gewichtsverhältnis der Vorläufer für ein negatives aktives Material und des Rohteers oder des Weichpechs 2 Gew.-% bis 20 Gew.-% in Bezug auf 100 Gew.-% der Vorläufer für das negative aktive Material beträgt, wobei
der Schritt des Beschichtens mit dem Rohteer oder dem Weichpech durchgeführt wird durch:

Mischen der Vorläufer für das negative aktive Material und Rohteer oder Weichpech und
Rühren der Mischung mit einer Geschwindigkeit von 50 U/min bis 100 U/min für 10 Minuten bis 60 Minuten.

**2.** Verfahren nach Anspruch 1, wobei:
die Komponente mit niedrigem Molekulargewicht ein gewichtsmittleres Molekulargewicht (Mw) von 78 bis 128 hat.

**3.** Verfahren nach Anspruch 1, wobei:

in dem Schritt des Beschichtens Si mit dem Rohteer oder dem Weichpech
eine Beschichtungslösung verwendet wird, die durch Zugabe von Rohteer oder Weichpech zu einem Lösungsmittel in einer Konzentration von 50 Gew.-% bis 70 Gew.-% hergestellt wird.

**4.** Verfahren nach Anspruch 3, wobei:
das Lösungsmittel N-Methylpyrrolidon, Dimethylformaldehyd, Dimethylsulfoxid, Tetrahydrofuran, Aceton oder eine Kombination davon ist.

**5.** Verfahren nach Anspruch 1, wobei:
der Schritt des Temperns eines resultierenden Beschichtungsprodukts bei 800 °C bis 950 °C für 0,5 Stunden bis 2 Stunden durchgeführt wird.

**6.** Verfahren nach Anspruch 1, wobei:
der Schritt des Temperns eines resultierenden Beschichtungsprodukts durchgeführt wird, indem die Temperatur mit einer Temperaturanstiegsgeschwindigkeit von 2 °C/min bis 10 °C/min auf eine Endtemperatur von 800 bis 950 °C oder weniger erhöht wird.

**7.** Verfahren nach Anspruch 1, wobei:
der Schritt des Temperns eines erhaltenen Beschichtungsprodukts durchgeführt wird durch:

Erhöhen der Temperatur zunächst auf 300 °C bis 400 °C mit einer Temperaturanstiegsgeschwindigkeit von 2 °C/min bis 10 °C/min,
Halten bei dieser Temperatur 0,5 bis 2 Stunden lang und dann
Erhöhen der Temperatur auf eine Endtemperatur von 800 bis 950 °C oder weniger mit einer Temperaturanstiegsrate von 2 °C/min bis 10 °C/min.

**8.** Verfahren nach Anspruch 1, wobei:
der Vorläufer für ein negatives aktives Material, das Si enthält, Si, Si-C-Verbundwerkstoff, Si-Oxid oder eine Kombination davon ist.

**9.** Negatives aktives Material für Lithium-Sekundärbatterien, umfassend:

einen Kern, der Si umfasst; und
einen amorphen Kohlenstoff, der auf der Kernoberfläche angeordnet ist;
wobei die spezifische Oberfläche nach Brunauer-Emmett-Teller (BET) 1 $m^2/g$ bis 2,91 $m^2/g$ beträgt,
wobei der Si enthaltende Kern ein Si-C-Verbundwerkstoff ist,
wobei ein Spannwert 1,41 oder weniger beträgt.

**10.** Negatives aktives Material nach Anspruch 9, wobei:
der amorphe Kohlenstoff eine Schicht ist, die die Kernoberfläche kontinuierlich bedeckt.

**11.** Negatives aktives Material nach Anspruch 9, wobei:
der amorphe Kohlenstoff als eine Insel vorliegt, die diskontinuierlich auf der Kernoberfläche angeordnet ist.

**12.** Negatives aktives Material nach Anspruch 9, wobei:
der amorphe Kohlenstoff Rohteer oder Weichpech ist, das in amorphen Kohlenstoff umgewandelt wurde.

**13.** Lithium-Sekundärbatterie, umfassend:

eine negative Elektrode, die das negative aktive Material aus einem der Ansprüche 9 bis 12 umfasst;

eine positive Elektrode, die ein aktives Material für die positive Elektrode umfasst; und
einen nicht wässrigen Elektrolyten.

## Revendications

**1.** Procédé de fabrication d'un matériau actif négatif pour une batterie secondaire au lithium, comprenant les étapes consistant à :

revêtir des précurseurs de matériau actif négatif contenant du Si avec du goudron brut ou du brai gras ; et recuire le produit de revêtement résultant,
dans lequel, le goudron brut contient un composant de faible poids moléculaire qui peut être éliminé par un processus de distillation en une quantité de 20 % en poids ou moins, et un rapport pondéral des précurseurs pour un matériau active négatif et le goudron brut ou le brai gras est de 2 % en poids à 20 % en poids par rapport à 100 % en poids des précurseurs pour le matériau actif négatif, dans lequel
l'étape consistant à revêtir avec le goudron brut ou le brai gras est réalisée par l'intermédiaire des étapes consistant à :

mélanger les précurseurs pour le matériau actif négatif et du goudron brut ou du brai gras, et
agiter le mélange à une vitesse de 50 tr/min à 100 tr/min pendant 10 minutes à 60 minutes.

**2.** Procédé selon la revendication 1, dans lequel :
le composant de faible poids moléculaire présente un poids moléculaire moyen en poids (Mw) de 78 à 128.

**3.** Procédé selon la revendication 1, dans lequel :

à l'étape consistant à revêtir du Si avec le goudron brut ou le brai gras,
une solution de revêtement préparée en ajoutant du goudron brut ou du brai gras à un solvant, à une concentration de 50 % en poids à 70 % en poids, est utilisée.

**4.** Procédé selon la revendication 3, dans lequel :
le solvant est la N-méthylpyrrolidone, le diméthylformaldéhyde, le diméthylsulfoxyde, le tétrahydrofurane, l'acétone ou une combinaison de ceux-ci.

**5.** Procédé selon la revendication 1, dans lequel :
l'étape de recuit d'un produit de revêtement résultant est effectuée entre 800°C et 950°C pendant 0,5 heure à 2 heures.

**6.** Procédé selon la revendication 1, dans lequel :
l'étape de recuit d'un produit de revêtement résultant est effectuée en élevant une température à une température finale de 800 à 950°C ou moins à une vitesse d'augmentation de température de 2°C/min à 10°C/min.

**7.** Procédé selon la revendication 1, dans lequel :
l'étape de recuit d'un produit de revêtement obtenu est réalisée par l'intermédiaire des étapes consistant à :

élever une température premièrement entre 300°C et 400°C à une vitesse d'augmentation de température de 2°C/min à 10°C/min,
la maintenir à cette température pendant 0,5 heure à 2 heures, puis
élever une température deuxièmement à une température finale de 800 à 950°C ou moins à une vitesse d'augmentation de température de 2°C/min à 10°C/min.

**8.** Procédé selon la revendication 1, dans lequel :
le précurseur d'un matériau actif négatif contenant du Si est Si, un composite Si-C, un oxyde de Si ou une combinaison de ceux-ci.

**9.** Matériau actif négatif pour une batterie secondaire au lithium, comprenant :

un noyau comprenant du Si ; et

un carbone amorphe positionné sur la surface de noyau ;
dans lequel une surface spécifique Brunauer-Emmett-Teller (BET) est de 1 $m^2/g$ à 2,91 $m^2/g$,
dans lequel le noyau comprenant du Si est un composite Si-C,
dans lequel une valeur de réglage est de 1,41 ou moins.

**10.** Matériau actif négatif selon la revendication 9, dans lequel :
le carbone amorphe existe sous la forme d'une couche qui recouvre en continu la surface de noyau.

**11.** Matériau actif négatif selon la revendication 9, dans lequel :
le carbone amorphe existe sous la forme d'un îlot qui est positionné de manière discontinue sur la surface de noyau.

**12.** Matériau actif négatif selon la revendication 9, dans lequel :
le carbone amorphe est du goudron brut ou du brai gras converti en carbone amorphe.

**13.** Batterie secondaire au lithium, comprenant :

une électrode positive comprenant le matériau actif négatif selon l'une quelconque des revendications 9 à 12 ;
une électrode positive comprenant un matériau actif d'électrode positive ; et
un électrolyte non aqueux.

FIG. 1

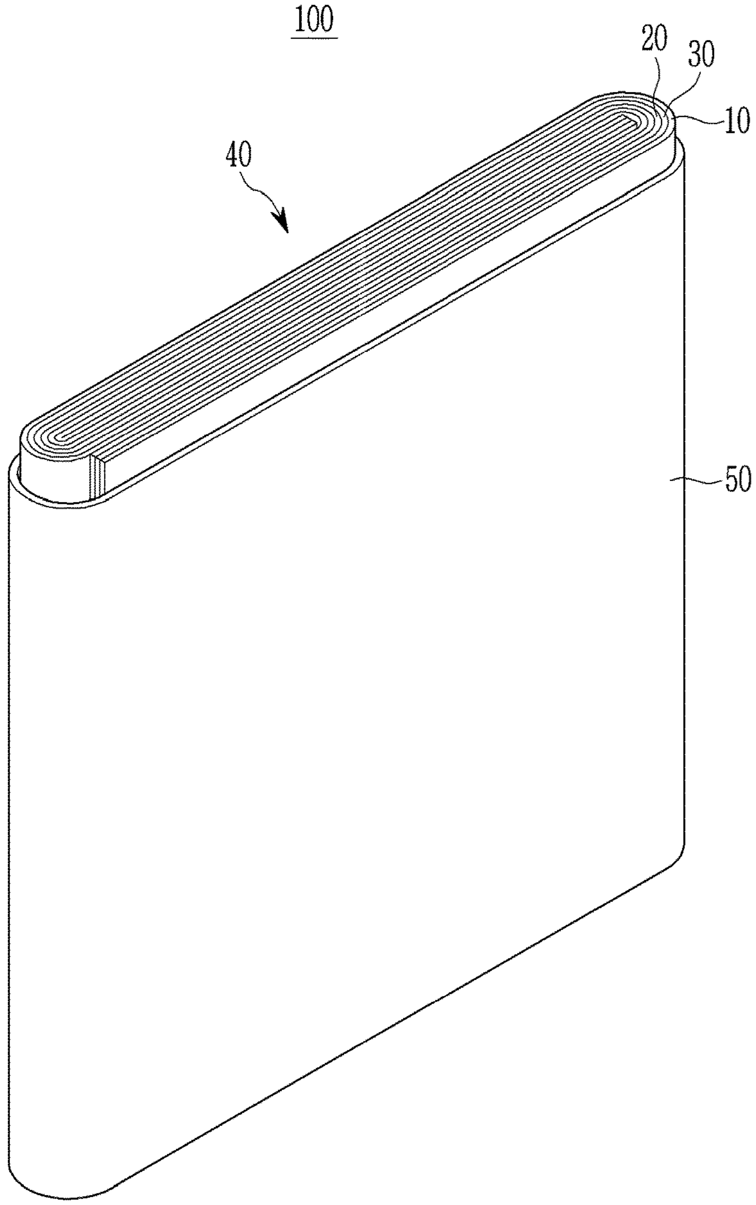

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2610949 A1
- EP 3046167 A1
- WO 2012077268 A1
- WO 20120614 A1
- JP 5648070 B

### Non-patent literature cited in the description

- Derwent World Patents Index. *DATABASE WPI*, vol. 2012 (42)